# EUROPÄISCHE PATENTANMELDUNG

(11) **EP 1 080 947 A1**
(43) Veröffentlichungstag der Anmeldung: **07.03.2001**
(21) Anmeldenummer: 00116523.2
(22) Anmeldetag: 31.07.2000
(51) Int. Cl.: B60B 17/00

(54) **Spurführungsrad**

(30) Priorität: 05.08.1999 DE 19936851
(71) Anmelder: SIEMENS AKTIENGESELLSCHAFT, 80333 München (DE)
(72) Erfinder: Düll, Hans-Jürgen, Dipl.-Ing., 91094 Langensendelbach (DE); Jahn, Erhard, Dipl.-Ing., 91341 Röttenbach (DE)

(57) **Zusammenfassung**

Ein Spurführungsrad (1, 11) mit einem Laufkranz (2, 12) und wenigstens einem Spurkranz (3, 13), ermöglicht dadurch, daß der Spurkranz (3, 13) bessere Gleiteigenschaften als der Laufkranz (2, 12) aufweist und/oder daß der Spurkranz (3, 13) gegenüber dem Laufkranz (2, 12) drehbar gelagert ist, eine verschleißminimale Spurführung.

## Beschreibung

Die Erfindung betrifft ein Spurführungsrad mit einem Laufkranz und wenigstens einem Spurkranz.

Derartige Spurführungsräder sind z. B. bei Schienenfahrzeugen und bei Seilbahnen vorhanden. Die bei Schienenfahrzeugen vorhandenen Spurführungsräder weisen nur einen einzigen Spurkranz auf und werden als Schienenräder bezeichnet. Demgegenüber besitzen die bei Seilbahnen eingesetzten Spurführungsräder zwei Spurkränze mit einem dazwischen liegenden Laufkranz.

Bei Schienenfahrzeugen ist die Spurführung mit Längsgleiten und Quergleiten (Schlupf) auf den Schienen verbunden. Die dabei entstehende Reibung führt zu entsprechendem Verschleiß an den Schienenrädern und an den Schienen. Um diesem Verschleiß, der insbesondere in Gleisbögen auftritt, entgegenzuwirken, wird in der EP-PS 0 374 290 ein Schienenfahrzeug vorgeschlagen, bei dem die Einzelräder entsprechend einem von einer Schienenverlauf-Meßeinrichtung gemessenen Schienenverlauf gelenkt werden. Die Schienenverlauf-Meßeinrichtung umfaßt entweder eine opto-elektronische oder eine magnetische bzw. elektro-magnetische Sensoreinrichtung.

Weiterhin ist in der DE-PS 42 31 346 eine Einzelrad-Steuervorrichtung für horizontal drehbewegliche Einzelräder eines Schienenfahrzeugs beschrieben. Diese Einzelrad-Steuervorrichtung umfaßt eine induktive Sensoreinrichtung zur berührungslosen Messung des Schienenverlaufs sowie eine Auswerteelektronik.

Die bekannten lenkbaren Radführungen benötigen einerseits eine relativ komplexe Auswerteelektronik. Andererseits können bestimmte Betriebsbedingungen, wie z. B. vereiste oder schneebedeckte bzw. stark verschmutzte Schienen, möglicherweise zu einer ungenauen Lenkung des Einzelrades führen. Weiterhin ist die Messung des Schienenverlaufs abhängig vom Zustand des Schienenkopfes. Weist dieser bereits stärkere Verschleißspuren auf, dann treten möglicherweise ungenaue Messungen auf, die von der Auswerteelektronik nicht erkannt werden und zu einer fehlerhaften Lenkung der Einzelräder führen, so daß es dann zum Spurkranzanlauf kommt.

Andererseits ist für den Lauf in der Geraden in der Regel eine schwenksteife Radführung eine Voraussetzung für einen ruhigen Radlauf und eine sichere Spurführung. Bei konventionellen Fahrwerken trägt sowohl im Gleisbogen als auch in der Gleisgeraden das Anlaufen des Spurkranzes am Schienenkopf zur Spurführung des Fahrzeugs bei.

Aufgabe der vorliegenden Erfindung ist es, ein Spurführungsrad zu schaffen, das eine verschleißminimale Spurführung ermöglicht.

Die Aufgabe wird erfindungsgemäß durch ein Spurführungsrad gemäß Anspruch 1 gelöst. Vorteilhafte Ausgestaltungen der Erfindung sind in den weiteren Ansprüchen beschrieben.

Das Spurführungsrad gemäß Anspruch 1 umfaßt einen Laufkranz und wenigstens einen Spurkranz. Erfindungsgemäß weist der Spurkranz bessere Gleiteigenschaften als der Laufkranz auf und/oder ist der Spurkranz gegenüber dem Laufkranz drehbar gelagert.

Die besseren Gleiteigenschaften des Spurkranzes gegenüber dem Laufkranz werden z.B. dadurch erreicht, daß Spurkranz und Laufkranz aus verschiedenen Werkstoffen bestehen. So kann z.B. der Laufkranz aus einem härteren Metall (z. B. Stahl) und der Spurkranz aus einem weicheren Metall oder aus Kunststoff bestehen. Weiterhin ist es auch möglich, daß der Laufkranz und der Spurkranz aus dem gleichen Material bestehen (z. B. Stahl) und in dem Material, aus dem der Spurkranz gefertigt ist, z. B. Graphiteinlagerungen vorhanden sind.

Bei dem Spurführungsrad gemäß Anspruch 1 kann alternativ dazu der Spurkranz gegenüber dem Laufkranz drehbar gelagert sein. Der Spurkranz kann sich somit beim Anlauf an den Schienenkopf unabhängig vom Laufkranz auf seine eigene Umfangsgeschwindigkeit einstellen. In der Regel weist der Spurkranz eine höhere Umfangsgeschwindigkeit als der Laufkranz auf.

Bei dem Spurführungsrad gemäß Anspruch 1 können erfindungsgemäß auch die beiden vorstehend beschriebenen Maßnahmen gemeinsam verwirklicht sein.

Die Erfindung beruht auf der Erkenntnis, daß der Spurkranz selbst nichts zur Traktion beiträgt und daß der verschleißbehaftete Spurkranzanlauf lediglich für die Spurführung erforderlich ist.

Die erfindungsgemäße Lösung kann sowohl bei Spurführungsrädern mit nur einem Spurkranz, z. B. bei Schienenfahrzeugen, als auch bei Spurführungsrädern mit zwei Spurkränzen, z. B. bei Seilbahnen, angewandt werden.

Im Rahmen der Erfindung kann der Spurkranz zumindest teilweise formschlüssig (z. B. mittels einer Nut) und/oder zumindest teilweise kraftschlüssig (z. B. aufgeschrumpft) und/oder zumindest teilweise gefügeschlüssig (z. B. angeschweißt) mit dem Laufkranz verbunden sein.

Bei einem gegenüber dem Laufkranz drehbar gelagertem Spurkranz kann dieser mittels Gleitlager und/oder mittels Wälzlager gelagert sein.

Bei einem gegenüber dem Laufkranz drehbar gelagertem Spurkranz werden Wartungsarbeiten am Spurführungsrad erleichtert, wenn der Spurkranz zumindest in einer Drehrichtung arretierbar ist.

Nachfolgend werden zwei Ausführungsbeispiele der Erfindung anhand der Zeichnung näher erläutert. Es zeigen:
- FIG 1: einen Querschnitt einer ersten Ausführungsform des erfindungsgemäßen Spurführungsrades,
- FIG 2: einen Querschnitt einer zweiten Ausführungsform des erfindungsgemäßen Spurführungsrades.

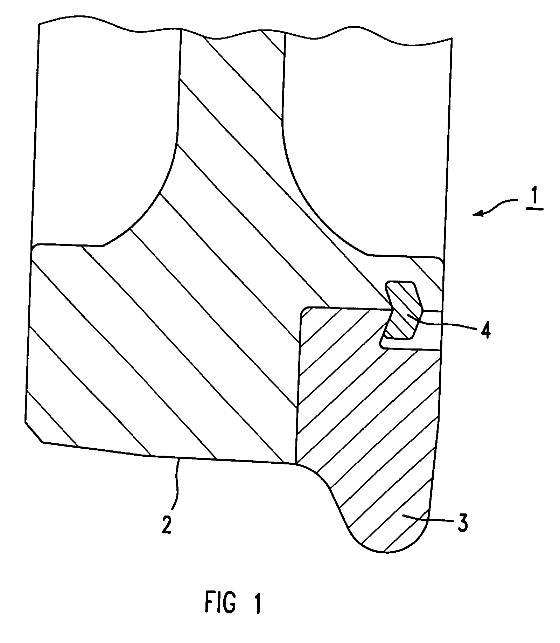

In den FIG 1 ist mit 1 ein Spurführungsrad bezeichnet, das als Schienenrad ausgeführt ist und einen Laufkranz 2 mit einer konisch ausgebildeten Lauffläche sowie einen Spurkranz 3 aufweist. Der Laufkranz 2 und der Spurkranz 3 bilden zusammen das Radprofil. Bei dem in FIG 1 dargestellten Ausführungsbeispiel ist das Spurführungsrad 1 als Vollrad, auch als Monobloc-Rad bezeichnet, ausgebildet. Der Laufkranz 2 wird in diesem Fall von der Außenumfangsfläche des Spurführungsrades 1 gebildet.

Bei dem in der FIG 1 dargestellten Ausführungsbeispiel ist der Spurkranz 3 mittels eines Sprengringes 4 fest mit dem Laufkranz 2 verbunden. Der Spurkranz 3 kann durch Lösen des Sprengringes 4 vom Spurführungsrad 1 entfernt werden. Aufgrund der festen Verbindung zwischen Spurkranz 3 und Laufkranz 2 drehen sich Spurkranz 3 und Laufkranz 2 mit gleicher Drehzahl. Um eine verschleißminimale Spurführung zu gewährleisten, weist der Spurkranz 3 bessere Gleiteigenschaften als der Laufkranz 2 auf.

Die besseren Gleiteigenschaften des Spurkranzes 3 gegenüber dem Laufkranz 2 werden z.B. dadurch erreicht, daß Spurkranz 3 und Laufkranz 2 aus verschiedenen Werkstoffen bestehen. So kann z.B. der Laufkranz 2 aus einem härteren Metall (z. B. Stahl) und der Spurkranz 3 aus einem weicheren Metall oder aus Kunststoff bestehen. Weiterhin ist es auch möglich, daß der Laufkranz 2 und der Spurkranz 3 aus dem gleichen Material bestehen (z. B. Stahl) und in dem Material, aus dem der Spurkranz 3 gefertigt ist, z. B. Graphiteinlagerungen vorhanden sind.

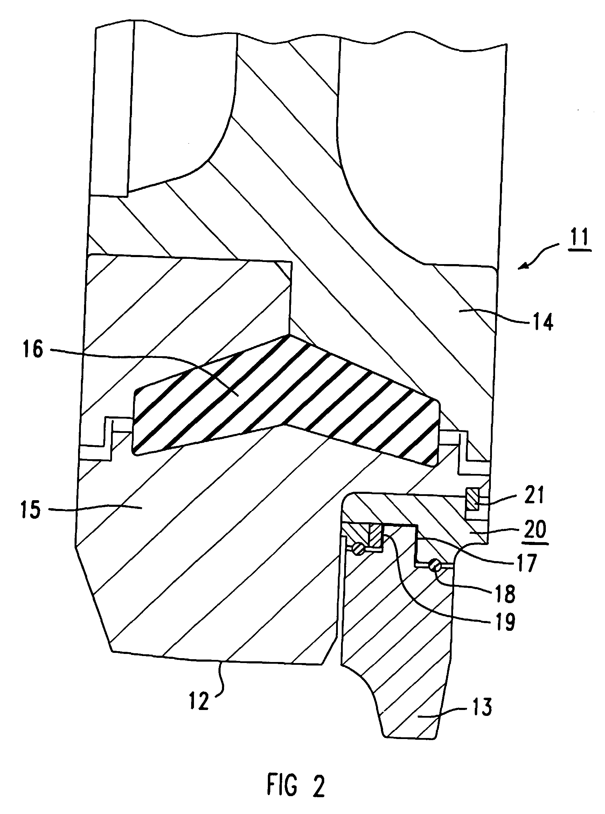

In den FIG 2 ist mit 11 ein Spurführungsrad bezeichnet, das wiederum als Schienenrad ausgeführt ist und einen Laufkranz 12 mit einer konisch ausgebildeten Lauffläche sowie einen Spurkranz 13 aufweist. Der Laufkranz 12 und der Spurkranz 13 bilden zusammen das Radprofil. Bei dem in FIG 2 dargestellten Ausführungsbeispiel weist das Spurführungsrad 11 eine Radscheibe 14 auf, die an ihrem Außenumfang von einem Radreifen 15 umschlossen wird. Der Laufkranz 12 wird in diesem Fall vom Radreifen 15 des Spurführungsrades 11 gebildet.

Zwischen der Radscheibe 14 und dem Radreifen 15 sind Dämpfungselemente 16 angeordnet.

Bei dem in der FIG 2 dargestellten Ausführungsbeispiel ist der Spurkranz 13 gegenüber dem Laufkranz 12 mittels Gleitlager 17 drehbar gelagert. Der Spurkranz 13 kann sich somit beim Anlauf an den Schienenkopf unabhängig vom Laufkranz 12 auf seine eigene Umfangsgeschwindigkeit einstellen. In der Regel weist der Spurkranz 13 eine höhere Umfangsgeschwindigkeit als der Laufkranz 12 auf. Das Spurführungsrad 11 ist aufgrund seines gegenüber dem Laufkranz 12 drehbar gelagerten Spurkranzes 13 besonders für Nahverkehrsschienenfahrzeuge geeignet, die im allgemeinen engere Gleisbögen als Vollbahnen befahren müssen.

Die Lagerung des Spurführungsrades 11 umfaßt neben den Gleitlagern 17 Dichtungen 18 und einen elastischen Druckring 19.

In vorteilhafter Weise sind der Spurkranz 13 und seine Lagerung 17, 18, 19 als separate Baugruppe 20 ausgeführt, die mittels eines Sprengringes 21 verdrehfest am Radreifen 15 angeordnet ist. Der Spurkranz 13 ist damit gegenüber dem Laufkranz 12 drehbeweglich.

Um Wartungsarbeiten am Spurführungsrad 11 nochmals zu erleichtern kann der Spurkranz 13 in zumindest einer Drehrichtung arretierbar sein. Dies kann über Formschluß oder Kraftschluß, z. B. mechanisch, elektrisch, hydraulisch pneumatisch und/oder (elektro-)magnetisch erfolgen.

Zusätzlich zur Drehbeweglichkeit des Spurkranzes 13 gegenüber dem Laufkranz 12 kann der Spurkranz 13 auch noch bessere Gleiteigenschaften als der Laufkranz 14 aufweisen. Beispiele für eine Realisierung sind in der Beschreibung zu dem in FIG 1 dargestellten Spurführungsrad angegeben.

## Patentansprüche

1. Spurführungsrad mit einem Laufkranz (2, 12) und wenigstens einem Spurkranz (3, 13),
**dadurch gekennzeichnet**,
daß der Spurkranz (3, 13) bessere Gleiteigenschaften als der Laufkranz (2, 12) aufweist und/oder daß der Spurkranz (3, 13) gegenüber dem Laufkranz (2, 12) drehbar gelagert ist.

2. Spurführungsrad nach Anspruch 1,
**dadurch gekennzeichnet**,
daß nur an einer Seite des Laufkranzes (2, 12) ein Spurkranz (3, 13) angeordnet ist.

3. Spurführungsrad nach Anspruch 1,
**dadurch gekennzeichnet**,
daß zu beiden Seiten des Laufkranzes jeweils ein Spurkranz angeordnet ist.

4. Spurführungsrad nach Anspruch 1,
**dadurch gekennzeichnet**,
daß der Spurkranz (3) zumindest teilweise formschlüssig und/oder zumindest teilweise kraftschlüssig und/oder zumindest teilweise gefügeschlüssig mit dem Laufkranz (2) verbunden ist.

5. Spurführungsrad nach Anspruch 1,
**dadurch gekennzeichnet**,
daß der Spurkranz (13) mittels Gleitlager (17) und/oder mittels Wälzlager gelagert ist.

6. Spurführungsrad nach Anspruch 1,
**dadurch gekennzeichnet**,
daß der Laufkranz (12) von einem auf einer Radscheibe (14) sitzenden Radreifen (15) gebildet wird.

7. Spurführungsrad nach Anspruch 1,
**dadurch gekennzeichnet**,
daß der Spurkranz (13) und seine Lagerung (17 - 19) als separate Baugruppe (20) ausgeführt sind.

8. Spurführungsrad nach Anspruch 1,
**dadurch gekennzeichnet**,
daß der Spurkranz (13) zumindest in einer Drehrichtung arretierbar ist.
